(19) Europäisches Patentamt

European Patent Office

Office européen des brevets

(11) **EP 3 570 421 B1**

(12) **EUROPEAN PATENT SPECIFICATION**

(45) Date of publication and mention
of the grant of the patent:
**18.03.2026 Bulletin 2026/12**

(21) Application number: **18738697.4**

(22) Date of filing: **09.01.2018**

(51) International Patent Classification (IPC):
*H02M 7/219* ^(2006.01)   *H02M 7/23* ^(2006.01)
*H02M 3/00* ^(2006.01)   *H02M 1/00* ^(2006.01)

(52) Cooperative Patent Classification (CPC):
**H02M 7/23; H02M 1/0043; H02M 3/00;**
**H02M 7/219;** Y02B 70/10

(86) International application number:
**PCT/CN2018/071954**

(87) International publication number:
**WO 2018/130149 (19.07.2018 Gazette 2018/29)**

(54) **POWER CONVERSION APPARATUS AND CONTROL METHOD FOR POWER CONVERSION APPARATUS**

STROMUMWANDLUNGSVORRICHTUNG UND STEUERUNGSVERFAHREN FÜR DIE STROMUMWANDLUNGSVORRICHTUNG

APPAREIL DE CONVERSION DE PUISSANCE ET PROCÉDÉ DE COMMANDE D'UN APPAREIL DE CONVERSION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2017 CN 201710022927**

(43) Date of publication of application:
**20.11.2019 Bulletin 2019/47**

(73) Proprietor: ZTE Corporation
**Shenzhen, Guangdong 518057 (CN)**

(72) Inventors:
• **HU, Yue**
  **Shenzhen**
  **Guangdong 518057 (CN)**
• **FAN, Jie**
  **Shenzhen**
  **Guangdong 518057 (CN)**
• **LIN, Guoxian**
  **Shenzhen**
  **Guangdong 518057 (CN)**
• **DONG, Xiufeng**
  **Shenzhen**
  **Guangdong 518057 (CN)**

• **ZHOU, Jianping**
  **Shenzhen**
  **Guangdong 518057 (CN)**
• **FAN, Shanshan**
  **Shenzhen**
  **Guangdong 518057 (CN)**
• **LIU, Hongjin**
  **Shenzhen**
  **Guangdong 518057 (CN)**

(74) Representative: **Iannone, Carlo Luigi et al**
**Barzanò & Zanardo S.p.A.**
**Via Borgonuovo, 10**
**20121 Milano (IT)**

(56) References cited:
**EP-A1- 3 316 469       WO-A1-2016/206269**
**CN-A- 102 082 514     CN-A- 103 269 177**
**CN-A- 104 980 015     CN-A- 105 186 883**
**CN-A- 105 743 352     US-A1- 2009 021 966**
**US-A1- 2016 261 205**

• KASPER MATTHIAS ET AL: "Hyper-efficient (98%) and super-compact (3.3kW/dm3) isolated AC/DC telecom power supply module based on multi-cell converter approach", 2014 IEEE ENERGY CONVERSION CONGRESS AND EXPOSITION (ECCE), IEEE, 14 September 2014 (2014-09-14), pages 150 - 157, XP032680470, DOI: 10.1109/ECCE.2014.6953388

## Description

### TECHNICAL FIELD

The present invention relates to, but is not limited to, the technical field of electronic circuits and, in particular, relates to a power conversion apparatus and a method for controlling a power conversion apparatus.

### BACKGROUND

With the popularity of cloud computing and big data, the demand for communication power consumption is greatly increased, so that higher requirements are provided for the reliability, power capacity and performance indicators of a communication power supply, and high efficiency and high power density are inevitable trends of the development of the communication power supply. A power conversion apparatus formed by combining a plurality of power conversion units has a remarkable advantage in improving conversion efficiency and power density. However, in the control of the power conversion apparatus formed by combining a plurality of power conversion units, the manner of controlling the entire power change circuit is complicated, and it is difficult to achieve the natural voltage equalizing of the power conversion apparatus, so that the effect of the entire power change processing is not ideal, and the reliability of the power change is not high.

Further relevant technologies are also known from KASPER MATTHIAS ET AL: "Hyper-efficient (98%) and super-compact (3.3kW/dm3) isolated AC/DC telecom power supply module based on multicell converter approach", IEEE, pages 150-157, XP032680470, 14 September 2014 (2014-09-14); US 2016/261205 A1 (KOLAR JOHANN [CN] ET AL), 8 September 2016 (2016-09-08); and WO 2016/206269A1, (ZTE CORP [CN]), 29 December 2016 (2016-12-29) & EP3316469 A1, (ZTE CORP [CN]), 2 May 2018 (2018-05-02).

### SUMMARY

The invention refers to a power conversion apparatus according to claim 1, and a corresponding method for controlling a power conversion apparatus according to claim 8. Preferred embodiments are defined in the dependent claims.

Embodiments of the present invention provide a power conversion apparatus and a method for controlling a power conversion apparatus, so as to achieve natural voltage equalizing of the power conversion apparatus.

An embodiment of the present invention provides a power conversion apparatus. The apparatus includes a power conversion unit group and a control unit.

The power conversion unit group includes at least two power conversion units which are connected in series, the power conversion unit group is connected in series to an inductor unit and a power supply unit, and an output of at least one of the power conversion units is used as a power conversion result of the power conversion apparatus.

The control unit is connected to each of the power conversion units, and inputs corresponding control signals to the power conversion units. The control signals enable the each of the power conversion units to have a same voltage.

An embodiment of the present invention further provides a method for controlling a power conversion apparatus. The method is applied to the above-mentioned power conversion apparatus and includes steps described below.

The control unit is respectively connected to the each of the power conversion units and inputs the corresponding control signals to the power conversion units.

The respective control signal is accessed to the each of the power conversion units, and enables the power conversion units to have the same voltage. The output of the at least one of the power conversion units is used as the power conversion result of the power conversion apparatus.

According to the power conversion apparatus and the method for controlling a power conversion apparatus provided in the embodiments of the present invention, the power conversion unit group and the control unit are provided. The power conversion unit group includes at least two power conversion units which are connected in series, the power conversion unit group is connected in series to the inductor unit and the power supply unit, and the output of at least one of the power conversion units is used as the power conversion result of the power conversion apparatus. The control unit is respectively connected to each of the power conversion units, and inputs the corresponding control signals to the power conversion units. The control signals enable the power conversion units to have the same voltage. That is, the control unit inputs the control signal to each power conversion unit, and the control signal enables each power conversion unit to have the same voltage, so that the natural voltage equalizing of each power conversion unit in the power conversion unit group is achieved, and the reliability of power conversion is improved.

Other aspects can be understood after the drawings and the detailed description are read and understood.

## BRIEF DESCRIPTION OF DRAWINGS

FIG. 1 is a schematic diagram of a power conversion apparatus according to an embodiment 1 of the present invention;

FIG. 2 is a schematic diagram of another power conversion apparatus according to the embodiment 1 of the present invention;

FIG. 3 is a schematic diagram of a power conversion unit according to the embodiment 1 of the present invention;

FIG. 4 is a schematic diagram of another power conversion apparatus according to the embodiment 1 of the present invention;

FIG. 5 is a schematic diagram of a pulse width modulation (PWM) modulation scheme according to an embodiment 2 of the present invention;

FIG. 6 is a flowchart of an interrupt control manner of a digital processor according to the embodiment 2 of the present invention;

FIG. 7 is a flowchart of a main control algorithm according to the embodiment 2 of the present invention; and

FIG. 8 is a diagram illustrating a driving manner of a power conversion unit and timing of an inductor current according to the embodiment 2 of the present invention.

## DETAILED DESCRIPTION

The embodiments of the present invention will be described in detail through implementation modes in conjunction with drawings.

Embodiment 1:

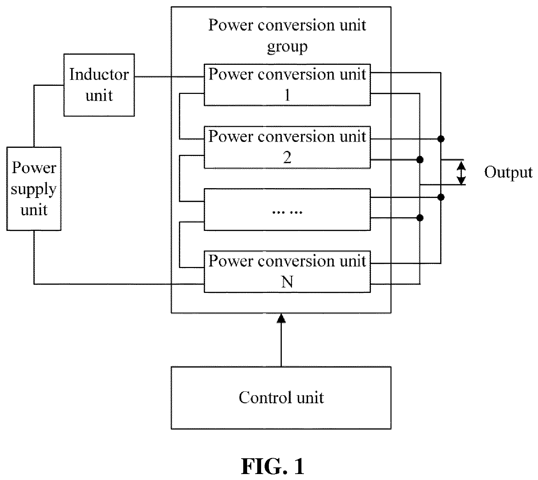

The present embodiment provides a power conversion apparatus. Referring to FIG. 1, the apparatus includes a power conversion unit group and a control unit. The power conversion unit group includes at least two power conversion units which are connected in series, the power conversion unit group is connected in series to an inductor unit and a power supply unit, and an output of at least one of the power conversion units is used as a power conversion result of the power conversion apparatus. The control unit is respectively connected to each of the power conversion units, and inputs a corresponding control signal to the each of the power conversion units. The control signal enables the each of the power conversion units to have the same voltage.

In an implementation mode, the power conversion apparatus provided in the present embodiment includes the power conversion unit group. The power conversion unit group includes at least two power conversion units which are connected in series. That is, the power conversion unit group is formed by multiple power conversion units. The power conversion unit group is connected in series to the inductor unit and the power supply unit and has two input ends. One input end is connected to an end of the inductor unit, and the other input end is connected to an output end of the power supply unit. The other output end of the power supply unit is connected to the other end of the inductor unit. In addition, the control unit is provided in the present embodiment, a control signal is input to each power conversion unit through the control unit, and each power conversion unit is made to have the same voltage through the control signal, that is, an output voltage of each power conversion unit is made to be the same. The control signal may be a PWM signal, i.e., a pulse width modulation signal. In the present embodiment, the control unit is provided to make each power conversion unit have the same voltage, thereby conveniently implementing natural voltage equalizing for each power conversion unit in the power conversion unit group, and improving the reliability of power conversion.

The control unit in the present embodiment may include a digital processor, that is, the voltage of each power change unit in the power conversion unit group may be controlled in a digital control manner, so as to implement natural voltage equalizing. The digital control technology is used for controlling the power conversion units, so that not only the design of a hardware circuit can be simplified and the flexibility of control can be increased, but also the power conversion circuit can be directly monitored, and in addition, the advantage of online upgrade can be satisfied. Therefore, the digital control technology can be used to well implement the control of the power conversion circuit.

In an implementation mode, the outputs of the power conversion units in the present embodiment are connected in parallel and the voltages of the power conversion units are the same, so the output of at least one power conversion unit may be used as the power conversion result of the power conversion apparatus. The power conversion result of the power conversion apparatus may be the output voltage of each power conversion unit, or may be the output power of each power conversion unit, or the like. Since the output voltage of each power conversion unit is the same, the output voltage of each power conversion unit may be used as the power conversion result of the power conversion apparatus.

The power conversion apparatus provided in the present embodiment may further include at least one of the inductance unit and the power supply unit. The inductor unit and the power supply unit in the present embodiment may be an inductor unit and a power supply unit that are provided outside the power conversion apparatus, or may be an inductor unit and a power supply unit that are provided inside the power conversion apparatus and that belong to the power conversion apparatus, and may be selectively provided as needed. In addition, the power supply unit in the present embodiment may be an alternating current power supply; and the inductor unit may be an inductor or a combination of inductors.

In an implementation mode, the control unit provided in the present embodiment is further connected to the inductor unit, the power supply unit, and the voltage output end of each power conversion unit, and generates a control signal corresponding to each power conversion unit according to the current value of the inductor unit, the voltage value of the power supply unit, and the voltage value of each power conversion unit.

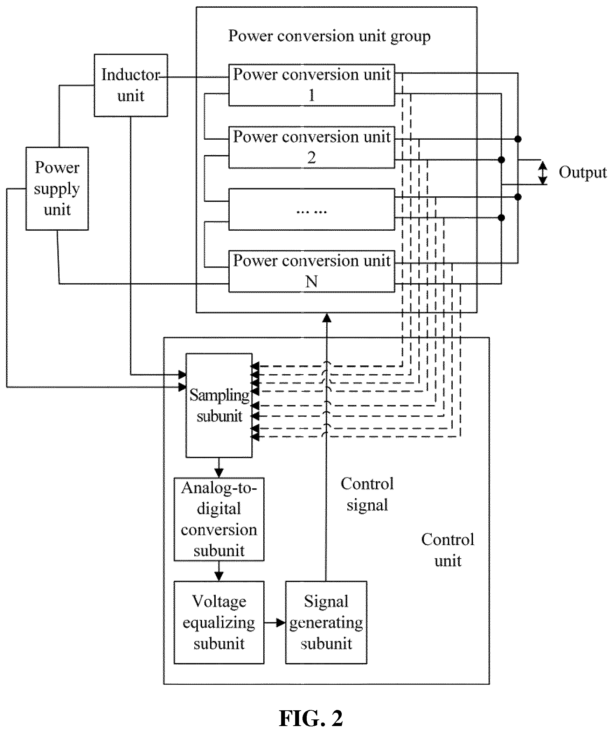

Referring to FIG. 2, the control unit provided in the present embodiment is connected to the inductor unit, the power supply unit, and the voltage output end of each power conversion unit, and acquires the current value of the inductor unit, the voltage value of the power supply unit, and the voltage value of each power conversion unit. And then processing is performed according to the acquired current value of the inductor unit, the voltage value of the power supply unit and the voltage value of each power conversion unit, so as to obtain the control signal corresponding to each power conversion unit.

In an implementation mode, the control unit in the present embodiment includes: a sampling subunit, a voltage equalizing subunit and a signal generating subunit. The sampling subunit acquires the current value of the inductor unit, the voltage value of the power supply unit and the voltage value of each power conversion unit in a preset period. The voltage equalizing subunit generates a uniform duty cycle according to the current value of the inductor unit, the voltage value of the power supply unit and the voltage value of each power conversion unit, which are acquired by the sampling subunit. The signal generating subunit performs phase shift processing according to the uniform duty cycle generated by the voltage equalizing subunit, and generates a control signal corresponding to each power conversion unit.

Referring to FIG. 2, the sampling subunit is provided to acquire the current value of the inductor unit, the voltage value of the power supply unit, and the voltage value of each power conversion unit, so that the control unit provided in the present embodiment may acquire the current value of the inductor unit, the voltage value of the power supply unit, and the voltage value of each power conversion unit in the preset period. The preset period may be set as needed, which is not limited in the present embodiment. The voltage equalizing subunit is provided for generating a current corresponding uniform duty cycle according to the current value of the inductor unit, the voltage value of the power supply unit and the voltage value of each power conversion unit, which are acquired by the sampling subunit. The signal generating subunit performs phase shift processing according to the uniform duty cycle generated by the voltage equalizing subunit, and generates the control signal corresponding to each power conversion unit. The voltage value of the power supply voltage in the present embodiment is the input voltage of the power conversion unit group.

In an implementation mode, referring to FIG. 2, the control unit provided in the present embodiment further includes: an analog-to-digital conversion subunit, which is connected between the sampling subunit and the voltage equalizing subunit, and is configured to convert the current value of the inductor unit, the voltage value of the power supply unit and the voltage value of each power conversion unit, which are acquired by the sampling subunit, into respective digital signals and output the digital signals to the voltage equalizing subunit. The voltage equalizing subunit generates the uniform duty cycle according to the accessed digital signals. The current value of the inductor unit, the voltage value of the power supply unit and the voltage value of each power conversion unit, which are acquired by the sampling unit are all analog signals, so when the duty cycle calculation is performed, the current value of the inductor unit, the voltage value of the power supply unit and the voltage value of each power conversion unit are converted from the analog signals into digital signals, and then the duty cycle is calculated according to the current value of the inductor unit, the voltage value of the power supply unit and the voltage value of each power conversion unit which are converted into the digital signals. For the calculation of the duty cycle, the control unit may calculate a current duty cycle by using a voltage-current double closed-loop control strategy according to the acquired current value of the inductor unit, the voltage value of the power supply unit, and the voltage value of each power conversion unit. The current duty cycle is taken as the magnitude of the current PWM signal of each power unit.

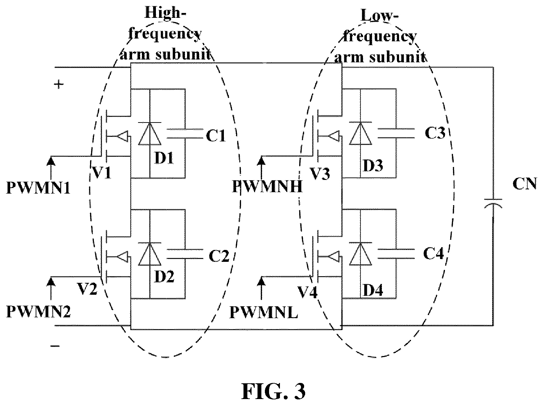

The power conversion unit provided in the present embodiment includes: a high-frequency arm subunit and a low-frequency arm subunit which are connected in parallel. The high-frequency arm subunit includes a pair of high-frequency arms connected in series, and the low-frequency arm subunit includes a pair of low-frequency arms connected in series. The control signal corresponding to the power conversion unit includes a pair of high-frequency PWM signals accessed in one-to-one correspondence with the pair of high-frequency arms connected in series and a pair of low-frequency PWM signals accessed in one-to-one correspondence with the pair of low-frequency arms connected in series. Referring to FIG. 3, the power conversion unit in the present embodiment is formed by a pair of high-frequency arms and a pair of low-frequency arms. The high-frequency arms are used for implementing power conversion, so that the input current follows the phase of the input voltage. The low-frequency arms are used for power frequency backflow. The control signal is respectively connected to each frequency arm, the upper transistor of the high-frequency arm is connected to a PWMN1, the lower transistor of the high-frequency arm is connected to a PWMN2, and the PWMN1 and the PWMN2 are a pair of high-frequency PWM signals. The upper transistor of the low-frequency arm is connected to a PWMH, the lower transistor of the low-frequency arm is connected to a PWML, and the PWMH and the PWML are a pair of low-frequency PWM signals. N is the number of power conversion units. For N power conversion units, 2N high-frequency PWM signals are generated, and the 2N high-frequency PWM signals are N pairs of PWMN1 and PWMN2 signals; and one pair of PWMH and PWML signals is generated. The switching period of the PWM signal corresponding to the high-frequency arm may be 35 K, and the switching period of the PWM signal corresponding to the low-frequency arm may be 50 Hz.

In an embodiment mode, as shown in FIG. 3, in the present embodiment, each frequency arm includes a metal-oxide-semiconductor (MOS) field-effect transistor, a capacitor and a freewheeling diode. A gate of the MOS transistor is connected to a corresponding PWM signal, a drain of the MOS transistor is connected to a positive electrode of the power supply unit, a source of the MOS transistor is connected to a drain of the other frequency arm of a pair, the freewheeling diode is connected to a body diode integrated by the MOS transistor itself and is connected in parallel between the drain and the source of the MOS transistor, and the capacitor is connected in parallel with the freewheeling diode. The pair of high-frequency PWM signals are complementary signals; and the pair of low-frequency PWM signals are the complementary signals. That is, the PWMN1 and PWMN2 each are connected to the gate of the corresponding MOS. V1 to V4 are MOS transistors. The on or off state of a MOS transistor is controlled by the PWM signal. D1 to D4 are freewheeling diodes. A freewheeling diode may be a body diode of the MOS transistor and provides freewheeling loops. C1 to C4 each are a capacitor connected in parallel with each freewheeling diode. When the circuit operates, the on-off states of the MOS transistors V1 and V2 are complementary, and the on-off states of the MOS transistors V3 and V4 are complementary. The modulation scheme is substantially a hybrid PWM modulation scheme. In the present embodiment, power conversion can be implemented, switching loss of the switch transistor can be reduced, and conversion efficiency is improved by using a pair of low-frequency arms. In addition, the MOS transistor in the present embodiment is used as a power switching transistor, and may be replaced by other power transistors such as an insulated gate bipolar transistor (IGBT). When another power transistor such as the IGBT is provided instead of the MOS transistor as the power switching transistor, a connection relationship between another power transistor such as the IGBT and a power supply unit, a PWM signal, and the like may be set as needed.

In the present embodiment, the high-frequency PWM signals in one-to-one correspondence with the high-frequency arms have a same duty cycle and phases staggered by $2\pi/N$; the pair of low-frequency PWM signals has a same duty cycle and a same phase, and the pair of low-frequency PWM signals of each power conversion unit has a same frequency. N is the number of power conversion units in the power conversion unit group. That is, the duty cycles of the high-frequency PWM signal and the low-frequency PWM signal in the present embodiment are equal. The phases of adjacent high-frequency PWM signals are sequentially staggered by $2\pi/N$, N is the number of power conversion units. The phases of the pair of low-frequency PWM signals are the same, that is, not staggered. In addition, the pair of low-frequency PWM signals of each power conversion unit may be power frequencies of 50 HZ.

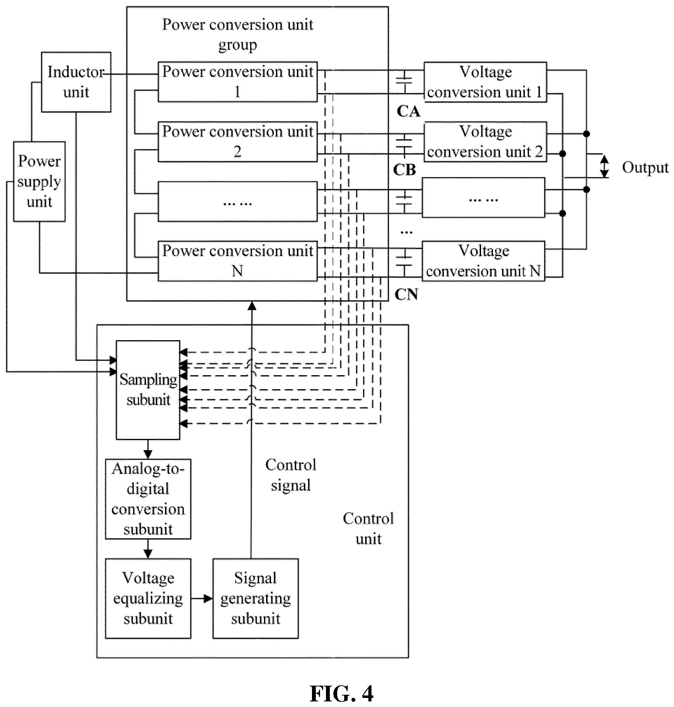

In an implementation mode, the power conversion apparatus provided in the present embodiment further includes: voltage conversion units in one-to-one correspondence with the power conversion units. The power conversion units are connected in parallel to the respective voltage conversion units, and an output of at least one of the voltage conversion units is used as the power conversion result of the power conversion apparatus. Referring to FIG. 4, in the power conversion apparatus provided in the present embodiment, a voltage conversion unit is further disposed in parallel with each power conversion unit, and voltage conversion units are connected in parallel with each other. The voltage conversion units are used for performing voltage adjustment to achieve natural current equalizing, for example, the voltage conversion units each may be configured to output a direct current voltage of 42V to 59.5V required by a communication power supply module. The voltage conversion unit is connected in parallel to the corresponding power conversion unit to perform voltage adjustment, and then the output of the voltage conversion unit may be used as a power conversion result of the power conversion apparatus, that is, the output voltage of the voltage conversion unit may be used as the power conversion result of the power conversion apparatus.

In an implementation mode, the power conversion apparatus in the present embodiment further includes: a capacitor unit corresponding to each power conversion unit. The capacitor unit is connected in parallel to the corresponding power conversion unit. Referring to FIG. 4, the capacitor units are bus capacitor Cs of the respective power conversion units, such as bus capacitors CA to CN. In addition, obtaining the voltage value of each power conversion unit in the present embodiment may be obtaining a voltage value of a bus capacitor corresponding to the each power conversion unit.

In an implementation mode, the power conversion unit in the present embodiment may be an alternating current/direct current (AC/DC) power conversion unit, and AC/DC power conversion units are connected in series with each other. The voltage conversion unit may be a DC/DC voltage conversion unit, and DC/DC voltage conversion unit are connected in parallel with each other. Each DC/DC voltage conversion unit is connected in parallel to the corresponding AC/DC power conversion unit, and is connected in parallel to the capacitor unit corresponding to the AC/DC power conversion unit corresponding to the each DC/DC voltage conversion unit. The capacitor unit is a bus capacitor. The DC/DC voltage conversion unit and the AC/DC power conversion unit corresponding thereto achieve energy interaction through the bus capacitor. The AC/DC power conversion units in the present embodiment are connected in series with each other, so that the bus voltage of each power conversion unit can be reduced. Therefore, the topology can implement a high-voltage function with a low-voltage power semiconductor device. In addition, the DC/DC voltage conversion units are connected in parallel with each other, so that the output can be naturally equalized. The sampling unit in the present embodiment is configured to obtain an input current, an inductor current and bus voltage information of each AC/DC unit. Then, analog-to-digital conversion is achieved through the analog-to-digital conversion subunit, voltage equalizing calculation is performed through the voltage equalizing subunit, and a control signal is generated in the signal generating unit, so that natural voltage equalizing of the bus voltage of each AC/DC unit is achieved.

In addition, the loop of the AC/DC power conversion unit at least includes a current loop and a voltage loop. The voltage loop is used for stabilizing the output voltage, and the current loop is used for enabling the input current to follow the phase angle of the input voltage. The voltage loop and the current loop are not limited to use of types I, II and III controllers. A duty cycle is obtained through a control of the voltage and current double closed loops over the total bus voltage. The magnitude of the PWM signal of each power unit is the same as that of the duty cycle. In addition, loop control algorithms include, but are not limited to, proportional-integral regulators, type I regulators, and type III regulators. In an implementation mode, the method further includes configuring a switching period of each power conversion unit. The switching periods of all power conversion units are the same, and the magnitudes of the PWM signals are the same. The phases of the high-frequency arms are staggered by $2\pi/N$ in sequence, and N is equal to the number of power units. In addition, the control period and the switching period are in a frequency doubling relationship, and sampling is triggered by single frequency doubling PWM, so as to minimize the sampling delay, increase the loop bandwidth, and reduce the switching loss.

When the control unit in the present embodiment is a digital controller, the control unit is not limited to a digital signal processing, and may also be implemented by others such as a single-chip microcomputer, an field-programmable gate array (FPGA), an advanced reduced instruction set computer (RISC) machine (ARM), etc. The topology of the AC/DC Power conversion unit in the present embodiment may be a totem pole power factor correction (PFC) topology, or may be other topologies such as a half bridge, a full bridge, and a BUCK circuit.

In the power conversion apparatus provided in the present embodiment, the power conversion unit group and the control unit are provided. The power conversion unit group includes at least two power conversion units which are connected in series, the power conversion unit group is connected in series to the inductor unit and the power supply unit, and the output of at least one of the power conversion units is used as the power conversion result of the power conversion apparatus. The control unit is respectively connected to each power conversion unit, and inputs a corresponding control signal to the each power conversion unit. The control signal enables the each power conversion unit to have the same voltage. The power conversion unit group is combined by multiple power conversion units to perform power conversion processing. With a low-voltage device, high efficiency can be achieved, the volume of a boost inductor is reduced, the power density is improved, the switching frequency is reduced, and conduction and switching losses are reduced. In addition, the control unit inputs the control signal to each power conversion unit, and the control signal enables each power conversion unit to have the same voltage, so that the natural voltage equalizing of each power conversion unit in the power conversion unit group is achieved. The voltage conversion unit is configured, so that the power conversion apparatus may achieve current equalizing, and the reliability of power conversion is improved.

Embodiment 2

The present embodiment provides a method for controlling a power conversion apparatus. The method is applied to the above-mentioned power conversion apparatus and includes steps described below. The control unit is respectively connected to the each power conversion unit and inputs the corresponding control signal to the each power conversion unit. The respective control signal is accessed to the each power conversion unit, and enables the each power conversion unit to have the same voltage. The output of the at least one of the power conversion units is used as the power conversion result of the power conversion apparatus.

In the present embodiment, the control signal is generated by a unified control unit, the control signal corresponding to each power conversion unit is input to the each corresponding power conversion unit, and the output voltage of each power conversion unit is made the same through the control signal. Since the outputs of all power conversion units are connected in parallel and the voltage of each power conversion unit is the same, the output of at least one power conversion unit may be used as the power conversion result of the power conversion apparatus. The power conversion result of the power conversion apparatus may be the output voltage of each power conversion unit.

In the present embodiment, the control unit generates a control signal corresponding to each power conversion unit according to the current value of the inductor unit, the voltage value of the power supply unit, and the voltage value of each power conversion unit, and inputs the control signal to the corresponding power conversion unit. In an implementation mode, the control unit generating the control signal corresponding to each power conversion unit according to the current value of the inductor unit, the voltage value of the power supply unit, and the voltage value of each power conversion unit includes: acquiring the current value of the inductor unit, the voltage value of the power supply unit and the voltage value of each power conversion unit in the preset period; generating the uniform duty cycle according to the acquired current value of the inductor unit, the voltage value of the power supply unit and the voltage value of each power conversion unit; and performing phase shift processing according to the uniform duty cycle to generate the control signal corresponding to each power conversion unit.

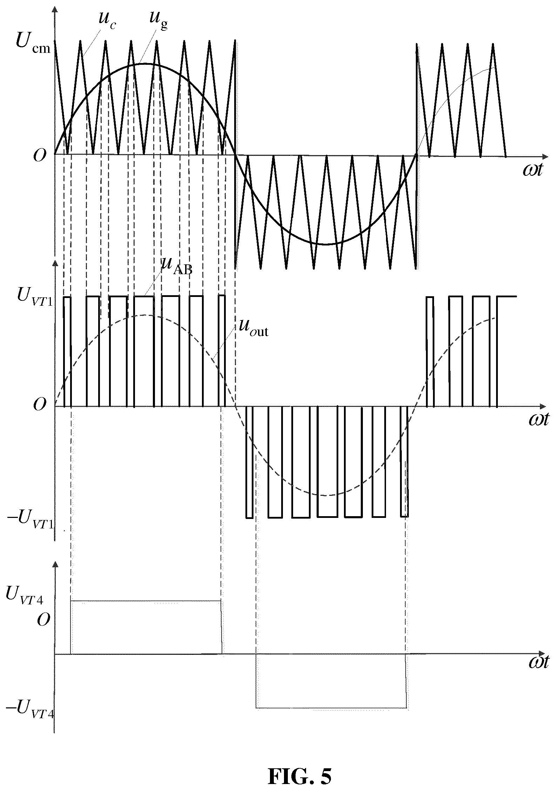

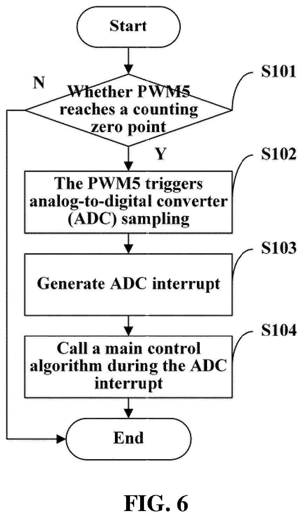

In the present embodiment, the control unit may calculate a current duty cycle of the loop by using the voltage-current double closed-loop control strategy by acquiring the input voltage of the power conversion unit group, the voltage value of each power conversion unit, and the current value of the inductor unit. The current duty cycle is taken as the magnitude of the current PWM signal of each power conversion unit. Then, the PWM signal of each power conversion unit is configured through PWM phase shift configuration. For example, the phases of the PWM signals corresponding to a pair of high-frequency arms in the power conversion unit are sequentially staggered by $2\pi/N$, the phases of the PWM signals corresponding to a pair of low-frequency arms are the same, and N is equal to the number of power conversion units. That is, the timing of each power conversion unit is staggered and the phases of the inductor current are staggered by $2\pi/N$, so that the function of natural voltage equalizing is implemented. In addition, as shown in FIG. 5, in the present embodiment, a hybrid PWM modulation scheme is used, and a unipolar debugging manner is adopted. Each power conversion unit includes a pair of high-frequency arms and a pair of high-frequency arms. The low-frequency arms are complementary power frequency signals for backflow, and the magnitude of the low-frequency arms is determined by the magnitude and direction of the input voltage. The high-frequency arms are complementary switching signals for obtaining an ideal sinusoidal signal, and the magnitude of the high-frequency arms is obtained through loop calculation. In the present embodiment, with a pair of low-frequency arms, the power conversion can be achieved, the switching loss of the switch transistor can be reduced, and the conversion efficiency is improved. The analog sampling conversion manner and the interrupt control manner of the digital processor included in the control unit in the present embodiment are shown in FIG. 6, and the method includes steps described below.

In S101, it is determined whether PWM5 reaches a counting zero point. If the PWM5 reaches the counting zero point, go to a step S102, if the PWM5 does not reach the counting zero point, the process ends.

In S102, the PWM5 triggers an analog-to-digital converter (ADC) to perform sampling.

In S103, ADC interrupt is generated.

In S104, main control algorithm is called during the ADC interrupt.

In the present embodiment, the counting of a counter of the PWM5 may be monitored in real time or when modulation is required, to determine whether the counting zero point is reached. After the counting zero point is reached, the PWM5 triggers the ADC to perform sampling conversion. The frequency of the PWM5 is N (N is an integer) times the switching frequency, and thus the sampling conversion frequency is N times the switching frequency. The main control algorithm is called during the ADC interrupt. The ADC interrupt is generated each time the sampling conversion of the ADC is finished. Therefore, the interrupt frequency is also N times the switching frequency.

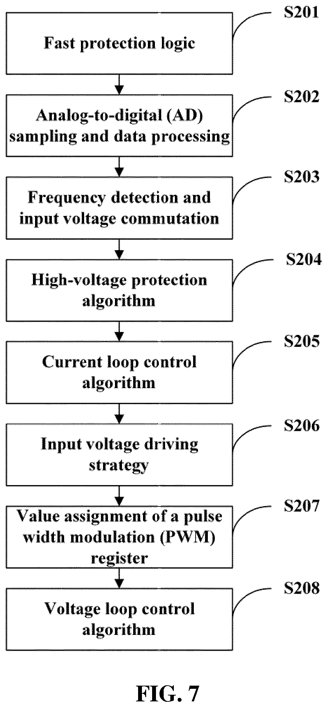

The flowchart of the main control algorithm in the present embodiment is shown in FIG. 7, and steps described below are included.

In S201, fast protection logic is performed.

In S202, analog-to-digital (AD) sampling and data processing are performed.

In S203, frequency detection and input voltage commutation are performed.

In S204, a high-voltage protection algorithm is performed.

In S205, a current loop control algorithm is performed.

In S206, an input voltage driving strategy is provided.

In S207, a value assignment of a PWM register is performed.

In S208, a voltage loop control algorithm is performed.

In the above manner, the single PWM frequency doubling sampling triggering manner is adopted to ensure that the sampling frequency is the same as the ripple frequency of the inductor current, and the voltage and current control is performed in each ripple cycle of the inductor current. The control delay is 1/N the switching frequency, which improves the bandwidth of the current loop. The input current has better following performance, so that the system can operate at a relatively low switching frequency to reduce the switching loss.

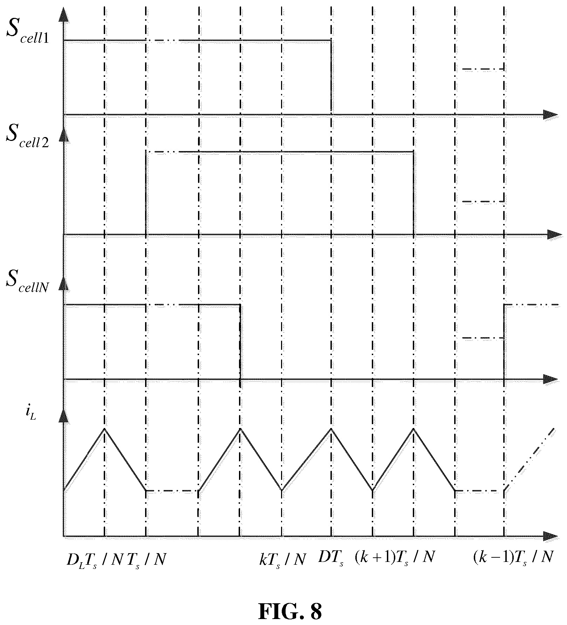

For the steady-state common duty cycle phase-shifting PWM mode provided in the embodiment of the present invention, referring to FIG. 8, $S_{cell1}$ to $S_{cellN}$ respectively correspond to the PWM signals of the lower transistors of the high-frequency arms of the N PFC power conversion units connected in series. $i_L$ is the inductor current. The PWM signals of the upper transistors of the high-frequency arms are added to the dead zone and then are complementary to the PWM signals of the lower transistors of the high-frequency arms. Their magnitude is the same and is determined by the above-mentioned voltage and current double closed loop calculation and output voltage feedforward. The bus voltage follows a given value through voltage loop calculation. Meanwhile, the phases of high-frequency arm signals of all power units are staggered, and the relationship between the staggered angle and the number N of power units is $2\pi/N$. By adopting the steady-state common duty cycle phase-shifting PWM scheme, the operating state of the circuit may be divided into N sections according to a relation between the input voltage and the output voltage:

$$\begin{cases} 0 < V_{in} < \dfrac{1}{N}V_o \\ \\ \text{.......} \\ \\ \dfrac{k}{N} < V_{in} < \dfrac{k+1}{N}V_o \\ \\ \text{......} \\ \\ \dfrac{N-1}{N} < V_{in} < V_o \end{cases}$$

Any input voltage section corresponds to 2N switch transistor combination states in one Ts switching period. In an operating process of the switch transistor, it is assumed that no switch transistor is damaged, and then the capacitance on each cell is equal in magnitude in one Ts switching period. For every k-th voltage section, the following commonality exists in one Ts switching period.

kTs/N-DTs: (N- (k-1)) boost transistors are switched on, (k-1) freewheeling diodes are switched on, and (k-1) bus capacitors are voltage divided.

DTs-(k+1)Ts/N: (N-k) boost transistors are switched on, k freewheeling diodes are switched on, and k bus capacitors are voltage divided.

The magnitude of k is represented by the following formula: $k = N - 1 - \text{floor}(\frac{NV_{in}}{V_O})$ . floor represents rounding down.

The high-frequency duty cycle on the inductor is $D_L$, and a relationship between the actual duty cycle D of the switch transistor and $D_L$ is: $D = \frac{K+D_L}{N}$ .

In a continuous conduction mode (CCM), the following is obtained through the Kirchhoff voltage law (KVL) and volt-second balance:

$$\frac{V_{in} - (k-1)\frac{V_O}{N}}{L} D_L T_S = \frac{\left(k\frac{V_O}{N} - V_{in}\right)}{L}(1 - D_L)T_S \quad (k \in (1, N))$$

$k = N - 1 - \text{floor}(\frac{NV_{in}}{V_O})$ is substituted to obtain the gain expression: $M = \frac{V_O}{V_{in}} = \frac{1}{1-D}$ .

It can be seen that the input voltage and the output voltage and the duty cycle still satisfy the boost circuit gain expression. Therefore, by using the phase-shifting steady-state common duty cycle control method, the charging and discharging time of each bus capacitor connected in series is basically the same and the stored energy is the same under any input voltage, so that the multi-phase power conversion unit not limited to four phases can implement the power conversion function of boosting, and each power conversion unit can achieve natural voltage equalizing. Currently, a vector control and sinusoidal PWM (SPWM) modulation scheme are generally used at present. For a control of the multi-unit combined power converter, bus non-voltage-equalizing and output non-current-equalizing are easily caused under the above modulation scheme. If uniform modulation is not used while an independent control of each power unit is used, the control modes are too many and are difficult to implement, and after the number of power units is increased, the driving and sampling become complicated. In the method for controlling a power conversion apparatus provided in the present embodiment, the uniform duty cycle is provided to form the steady-state common duty cycle, so that the normalization control of the multi-unit power converter can be achieved. A staggered control of each power converter unit can be achieved by using the phase-shifting control strategy. Therefore, the embodiment of the present invention provides a steady-state common duty cycle phase-shifting PWM control method. The PWM control method may use a hybrid unipolar PWM modulation scheme, which simplifies control, reduces the switching loss and achieves natural voltage equalizing of the multi-unit combined power converter.

In addition, the power conversion apparatus provided in the present embodiment is provided with a power conversion unit group formed by a plurality of power conversion units for power conversion, and since the plurality of power conversion units are connected in series and the output voltage is divided under the same input voltage, a low-voltage semiconductor device can be used to reduce the conduction loss. At the same switching frequency, the inductor ripple of the group of power conversion units connected in series is 1/N (N represents the number of the power conversion units connected in series) the inductor ripple of those not connected in series, so that the inductance of the inductor can be reduced, the volume of the magnetic piece can be reduced, and the power density can be increased. Since the inductor ripple of the power conversion unit group is reduced, the switching frequency can be reduced compared with the traditional single-phase power conversion unit, so that the switching loss can be reduced; and since each power conversion unit in the power conversion unit group is connected in series, a harmonic is reduced, and therefore the design difficulty of a filter is reduced. The power conversion unit group in the present embodiment is the multi-unit combined power converter.

The above-mentioned modules or steps of the present invention may be implemented by a universal computing apparatus, they may be concentrated on a single computing apparatus or distributed on a network formed by multiple computing apparatuses. They may be implemented by program codes executable by the computing apparatuses, so that they may be stored in a storage apparatus (read-only memory (ROM)/random access memory (ROM), magnetic disk, or optical disk) for execution by the computing apparatuses, and in some circumstances, the illustrated or described steps may be executed in sequences different from those described herein, or they may be made into single integrated circuit modules separately, or multiple modules or steps therein may be made into a single integrated circuit module for implementation. Therefore, the present application is not limited to any specific combination of hardware and software.

## Claims

1. A power conversion apparatus, comprising a power conversion unit group and a control unit, wherein

   the power conversion unit group comprises at least two power conversion units (1,..., N) which are connected in series, the power conversion unit group is connected in series to an inductor unit and a power supply unit, and an output of at least one of the power conversion units is configured to be used as a power conversion result of the power conversion apparatus;

   the control unit is connected to each of the power conversion units, and is configured to input corresponding control signals to the power conversion units, respectively, wherein the control signals are configured to enable output voltages of the power conversion units to have a same voltage value;

   **characterised in that**

   the control unit is further connected to the inductor unit, the power supply unit and a voltage output end of the each of the power conversion units, and the control unit is configured to generate, according to a current value of the inductor unit, a voltage value of the power supply unit and an output voltage value of the each of the power conversion units, a control signal corresponding to the each of the power conversion units.

2. The power conversion apparatus of claim 1, wherein the control unit comprises: a sampling subunit, a voltage equalizing subunit and a signal generating subunit; wherein

   the sampling subunit is configured to acquire the current value of the inductor unit, the voltage value of the power supply unit and the output voltage value of the each of the power conversion units in a preset period;

   the voltage equalizing subunit is configured to generate a uniform duty cycle according to the current value of the inductor unit, the voltage value of the power supply unit and the output voltage value of the each of the power conversion units, which are acquired by the sampling subunit; and

   the signal generating subunit is configured to perform phase shift processing according to the uniform duty cycle generated by the voltage equalizing subunit to generate the control signal corresponding to the each of the power conversion units.

3. The power conversion apparatus of claim 2, wherein the control unit further comprises: an analog-to-digital conversion subunit, which is connected between the sampling subunit and the voltage equalizing subunit and is configured to convert the current value of the inductor unit, the voltage value of the power supply unit and the output voltage value of the each of the power conversion units, which are acquired by the sampling subunit, into respective digital signals and output the digital signals to the voltage equalizing subunit; and the voltage equalizing subunit is configured to generate the uniform duty cycle according to the digital signals accessed from the analog-to-digital conversion subunit.

4. The power conversion apparatus of claim 2, wherein each of the power conversion units comprises: a high-frequency arm subunit and a low-frequency arm subunit which are connected in parallel; the high-frequency arm subunit comprises a pair of high-frequency arms connected in series, and the low-frequency arm subunit comprises a pair of low-frequency arms connected in series; and the control signal corresponding to the each of the power conversion units comprises: a pair of high-frequency pulse width modulation signals (PWMN1, PWMN2) connected to the pair of high-frequency arms respectively, and a pair of low-frequency pulse width modulation signals (PWMNH, PWMNL) connected to the pair of low-frequency arms respectively.

5. The power conversion apparatus of claim 4, wherein the pair of high-frequency arms in each of the at least two power conversion units comprise a high-frequency upper arm and a high-frequency lower arm, the pair of low-frequency arms in each of the at least two power conversion units comprises a low-frequency upper arm and a low-frequency lower arm, each arm in the pair of high-frequency arms and in the pair of high-frequency arms comprise a metal-oxide-semiconductor, MOS, transistor (V1, V2, V3, V4), a capacitor (C1, C2, C3, C4) and a freewheeling diode (D1, D2, D3, D4),

wherein a gate of the MOS transistor (V1, V2, V3, V4) of the each arm in the pair of high-frequency arms and in the pair of low-frequency arms is connected to a pulse width modulation signal corresponding to the each arm, the freewheeling diode (D1, D2, D3, D4) is a body diode integrated in the MOS transistor (V1, V2, V3, V4) and is connected between the drain and the source of the MOS transistor (V1, V2, V3, V4), and the capacitor (C1, C2, C3, C4) is connected in parallel with the freewheeling diode (D1, D2, D3, D4); the pair of high-frequency pulse width modulation signals are complementary signals; and the pair of low-frequency pulse width modulation signals are the complementary signals;

wherein, in a head one of the power conversion units connected in series, a drain of the MOS transistor (V1, V2, V3, V4) of each of the high-frequency upper arm and the low-frequency upper arm is connected to a positive electrode of the power supply unit; in a power conversion unit other than the head one of the power conversion units, a drain of the MOS transistor (V1, V2, V3, V4) of the high-frequency upper arm and the low-frequency upper arm is connected to a source of the MOS transistor (V1, V2, V3, V4) of each of the high-frequency lower arm and the low-frequency lower arm in a previous power conversion unit of the power conversion unit; and in each of the power conversion units, a drain of the MOS transistor (V1, V2, V3, V4) of each of the high-frequency lower arm and the low-frequency lower arm is connected to a source of a respective one of the high-frequency upper arm and the low-frequency upper arm; and

wherein, in each of the power conversion units, a source of the MOS transistor (V1, V2, V3, V4) of each of the high-frequency upper arm and the low-frequency upper arm is connected to a drain of a respective one of the high-frequency lower arm and the low-frequency lower arm; in a tail one of the power conversion units connected in series, a source of the MOS transistor (V1, V2, V3, V4) of each of the high-frequency lower arm and the low-frequency lower arm is connected to a negative electrode of the power supply unit; and in a power conversion unit other than the tail one of the power conversion units, a source of the MOS transistor (V1, V2, V3, V4) of each of the high-frequency lower arm and the low-frequency lower arm is connected to a drain of the MOS transistor (V1, V2, V3, V4) of a respective one of the high-frequency upper arm and the low-frequency upper arm in a next power conversion unit of the power conversion unit.

6. The power conversion apparatus of claim 5, wherein

multiple pairs of high-frequency pulse width modulation signals (PWMN1, PWMN2) respectively corresponding to the at least two power conversion units have a same duty cycle and phases staggered by $2\pi/N$;
multiple pairs of low-frequency pulse width modulation signals (PWMNH, PWMNL) respectively corresponding to the at least two power conversion units have a same duty cycle and a same phase;
the pair of low-frequency pulse width modulation signals (PWMNH, PWMNL) of the each of the power conversion units (1,..., N) has a same frequency; and
N is a number of power conversion units in the power conversion unit group.

7. The power conversion apparatus of any one of claims 1 to 6, further comprising: capacitor units respectively corresponding to the power conversion units, and voltage conversion units respectively corresponding to the power conversion units; the voltage output end of the each of the power conversion units is connected in parallel to a respective one of the capacitor units, and the respective of the capacitor units is connected in parallel to an input of a respective one of the voltage conversion units, the voltage output end of the each of the power conversion units is connected to an input of the respective one of the voltage conversion units, and an output of the respective one of the voltage conversion units is configured to be used as the power conversion result of the power conversion apparatus.

8. A method for controlling a power conversion apparatus, applied to the power conversion apparatus of any one of claims 1 to 7 comprising

the control unit being respectively connected to the each of the power conversion units (1,..., N) and inputting the corresponding control signals to the power conversion units respectively; and

the corresponding control signals being accessed to the power conversion units respectively, and enabling output voltages of the power conversion units to have the same voltage value; and the output of the at least one of the power conversion units being used as the power conversion result of the power conversion apparatus;

**characterised in that**

the control unit generates the control signal corresponding to the each of the power conversion units according to the current value of the inductor unit, the voltage value of the power supply unit and the output voltage value of the each of the power conversion units, and inputs the control signal to the corresponding power conversion unit.

9. The method for controlling a power conversion apparatus of claim 8, wherein the control unit generating, according to the current value of the inductor unit, the voltage value of the power supply unit and the voltage value of the each of the power conversion units (1,..., N), the control signal corresponding to the each of the power conversion units comprises:

acquiring the current value of the inductor unit, the voltage value of the power supply unit and the voltage value of the each of the power conversion units in the preset period;

generating the uniform duty cycle according to the acquired current value of the inductor unit, voltage value of the power supply unit and the output voltage value of the each of the power conversion units (1,..., N); and

performing phase shift processing according to the uniform duty cycle to generate the control signal corresponding to the each of the power conversion units (1,..., N).

**Patentansprüche**

1. Stromumwandlungsvorrichtung, die eine Leistungsumwandlungseinheit und eine Steuereinheit umfasst, wobei

die Gruppe der Leistungsumwandlungseinheiten mindestens zwei Leistungsumwandlungseinheiten (1,..., N) umfasst, die

in Reihe geschaltet ist, ist die Leistungsumwandlungseinheit-Gruppe mit einer Induktionseinheit und einer Stromversorgungseinheit in Reihe geschaltet, und ein Ausgang von mindestens einer der Leistungsumwandlungseinheiten ist so konfiguriert, dass er als ein Leistungsumwandlungsergebnis der Stromumwandlungsvorrichtung verwendet wird;

die Steuereinheit mit jeder der Leistungsumwandlungseinheiten verbunden ist und so konfiguriert ist, dass sie entsprechende Steuersignale in die jeweiligen Leistungsumwandlungseinheiten eingibt, wobei die Steuersignale so konfiguriert sind, dass sie es ermöglichen, dass die Ausgangsspannungen der Leistungsumwandlungseinheiten einen gleichen Spannungswert haben;

**dadurch gekennzeichnet**

die Steuereinheit ferner mit der Induktoreinheit, der Stromversorgungseinheit und einem Spannungsausgangsende jeder der Leistungsumwandlungseinheiten verbunden ist, und die Steuereinheit so konfiguriert ist, dass sie entsprechend einem Stromwert der Induktoreinheit, einem Spannungswert der Stromversorgungseinheit und einem Ausgangsspannungswert jeder der Leistungsumwandlungseinheiten ein Steuersignal erzeugt, das jeder der Leistungsumwandlungseinheiten entspricht.

2. Stromumwandlungsvorrichtung nach Anspruch 1, wobei die Steuereinheit umfasst: eine Abtastuntereinheit, eine Spannungsausgleichsuntereinheit und eine Signalerzeugungsuntereinheit; wobei

die Abtastuntereinheit so konfiguriert ist, dass sie den Stromwert der Induktoreinheit, den Spannungswert der Stromversorgungseinheit und den Ausgangsspannungswert jeder der Leistungsumwandlungseinheiten in einer voreingestellten Periode erfasst;

die Spannungsausgleichsuntereinheit so konfiguriert ist, dass sie ein gleichmäßiges Tastverhältnis gemäß dem Stromwert der Induktoreinheit, dem Spannungswert der Stromversorgungseinheit und dem Ausgangsspannungswert jeder der Leistungsumwandlungseinheiten, die von der Abtastuntereinheit erfasst werden, erzeugt; und

die Signalerzeugungsuntereinheit so konfiguriert ist, dass sie eine Phasenverschiebungsverarbeitung gemäß dem von der Spannungsausgleichsuntereinheit erzeugten einheitlichen Tastverhältnis durchführt, um das Steuersignal zu erzeugen, das jeder der Leistungsumwandlungseinheiten entspricht.

3. Stromumwandlungsvorrichtung nach Anspruch 2, wobei die Steuereinheit ferner umfasst: eine Analog-Digital-Wandler-Untereinheit, die zwischen die Abtast-Untereinheit und die Spannungsausgleichs-Untereinheit geschaltet ist und so konfiguriert ist, dass sie den Stromwert der Induktoreinheit, den Spannungswert der Stromversorgungseinheit und den Ausgangsspannungswert jeder der Leistungsumwandlungseinheiten, die von der Abtast-Untereinheit erfasst werden, in jeweilige digitale Signale umwandelt und die digitalen Signale an die Spannungsausgleichs-Untereinheit ausgibt; und die Spannungsausgleichs-Untereinheit so konfiguriert ist, dass sie das gleichmäßige Tastverhältnis entsprechend den digitalen Signalen erzeugt, auf die von der Analog-Digital-Wandler-Untereinheit zugegriffen wird.

4. Stromumwandlungsvorrichtung nach Anspruch 2, wobei jede der Leistungsumwandlungseinheiten Folgendes umfasst: eine Hochfrequenzzweig-Untereinheit und eine Niederfrequenzzweig-Untereinheit, die parallel geschaltet sind; wobei die Hochfrequenzzweig-Untereinheit ein Paar in Reihe geschalteter Hochfrequenzzweige umfasst, und die Niederfrequenzzweig-Untereinheit ein Paar in Reihe geschalteter Niederfrequenzzweige umfasst; und wobei das jeder der Leistungsumwandlungseinheiten entsprechende Steuersignal Folgendes umfasst:
ein Paar von Hochfrequenz-Pulsbreitenmodulationssignalen (PWMN1, PWMN2), die jeweils mit dem Paar von Hochfrequenzarmen verbunden sind, und ein Paar von Niederfrequenz-Pulsbreitenmodulationssignalen (PWMNH, PWMNL), die jeweils mit dem Paar von Niederfrequenzarmen verbunden sind.

5. Stromumwandlungsvorrichtung nach Anspruch 4, wobei das Paar von Hochfrequenzarmen in jeder der mindestens zwei Leistungswandlereinheiten einen oberen Hochfrequenzarm und einen unteren Hochfrequenzarm umfasst, das Paar von Niederfrequenzarmen in jeder der mindestens zwei Leistungswandlereinheiten einen oberen Niederfrequenzarm und einen unteren Niederfrequenzarm umfasst, jeder Zweig in dem Paar von Hochfrequenzzweigen und in dem Paar von Hochfrequenzzweigen einen Metall-Oxid-Halbleiter-Transistor, MOS, (V1, V2, V3, V4), einen Kondensator (C1, C2, C3, C4) und eine Freilaufdiode (D1, D2, D3, D4) umfasst,

wobei ein Gate des MOS-Transistors (V1, V2, V3, V4) jedes Arms in dem Paar von Hochfrequenzarmen und in dem Paar von Niederfrequenzarmen mit einem Pulsbreitenmodulationssignal verbunden ist, das dem jeweiligen Arm entspricht, die Freilaufdiode (D1, D2, D3, D4) eine in den MOS-Transistor (V1, V2, V3, V4) integrierte Body-Diode ist und zwischen den Drain und die Source des MOS-Transistors (V1, V2, V3, V4) geschaltet ist, und der Kondensator (C1, C2, C3, C4) parallel zu der Freilaufdiode (D1, D2, D3, D4) geschaltet ist; das Paar der hochfrequenten Pulsbreitenmodulationssignale komplementäre Signale sind; und das Paar der niederfrequenten Pulsbreitenmodulationssignale die komplementären Signale sind;
wobei in einer Kopfeinheit der in Reihe geschalteten Leistungsumwandlungseinheiten ein Drain des MOS-Transistors (V1, V2, V3, V4) sowohl des oberen Hochfrequenzzweigs als auch des oberen Niederfrequenzzweigs mit einer positiven Elektrode der Stromversorgungseinheit verbunden ist; in einer anderen Leistungsumwandlungseinheit als der Kopfeinheit der Leistungsumwandlungseinheiten ein Drain des MOS-Transistors (V1, V2, V3, V4) des Hochfrequenz-Oberarms und des Niederfrequenz-Oberarms mit einer Source des MOS-Transistors (V1, V2, V3, V4) sowohl des Hochfrequenz-Unterarms als auch des Niederfrequenz-Unterarms in einer vorhergehenden Leistungsumwandlungseinheit der Leistungsumwandlungseinheit verbunden ist; und in jeder der Leistungsumwandlungseinheiten ein Drain des MOS-Transistors (V1, V2, V3, V4) sowohl des Hochfrequenz-Unterarms als auch des Niederfrequenz-Unterarms mit einer Source eines jeweiligen des Hochfrequenz-Oberarms und des Niederfrequenz-Oberarms verbunden ist; und
wobei in jeder der Leistungsumwandlungseinheiten eine Source des MOS-Transistors (V1, V2, V3, V4) sowohl des oberen Hochfrequenzzweigs als auch des oberen Niederfrequenzzweigs mit einem Drain des unteren Hochfrequenzzweigs bzw. des unteren Niederfrequenzzweigs verbunden ist; in einer hinteren der in Reihe geschalteten Leistungsumwandlungseinheiten eine Source des MOS-Transistors (V1, V2, V3, V4) sowohl des unteren Hochfrequenzzweigs als auch des unteren Niederfrequenzzweigs mit einer negativen Elektrode der Stromversorgungseinheit verbunden ist; und in einer Leistungsumwandlungseinheit, die sich von der hinteren der Leistungsumwandlungseinheiten unterscheidet, ist eine Source des MOS-Transistors (V1, V2, V3, V4) sowohl des Hochfrequenz-Unterarms als auch des Niederfrequenz-Unterarms mit einem Drain des MOS-Transistors (V1, V2, V3, V4) eines jeweiligen Hochfrequenz-Oberarms und Niederfrequenz-Oberarms in einer nächsten Leistungsumwandlungseinheit der Leistungsumwandlungseinheit verbunden.

6. Stromumwandlungsvorrichtung nach Anspruch 5, wobei mehrere Paare von Hochfrequenz-Pulsweitenmodulationssignalen (PWMN1, PWMN2), die jeweils den mindestens zwei Leistungsumwandlungseinheiten entsprechen, haben ein gleiches Tastverhältnis und um $2\pi/N$ versetzte Phasen; mehrere Paare von niederfrequenten Pulsweitenmodulationssignalen (PWMNH, PWMNL), die jeweils den

mindestens zwei Leistungsumwandlungseinheiten ein gleiches Tastverhältnis und eine gleiche Phase haben; das Paar von niederfrequenten Pulsweitenmodulationssignalen (PWMNH, PWMNL) jeder der Leistungsumwandlungseinheiten (1,..., N) dieselbe Frequenz hat; und
N ist die Anzahl der Leistungsumwandlungseinheiten in der Gruppe der Leistungsumwandlungseinheiten.

7. Stromumwandlungsvorrichtung nach einem der Ansprüche 1 bis 6, die ferner umfasst: Kondensatoreinheiten, die jeweils den Leistungsumwandlungseinheiten entsprechen, und Spannungsumwandlungseinheiten, die jeweils den Leistungsumwandlungseinheiten entsprechen; wobei das Spannungsausgangsende jeder der Leistungsumwandlungseinheiten parallel mit einer jeweiligen der Kondensatoreinheiten verbunden ist und die jeweilige der Kondensatoreinheiten parallel mit einem Eingang einer jeweiligen der Spannungsumwandlungseinheiten verbunden ist, das Spannungsausgangsende jeder der Leistungsumwandlungseinheiten mit einem Eingang der jeweiligen der Spannungsumwandlungseinheiten verbunden ist und ein Ausgang der jeweiligen der Spannungsumwandlungseinheiten so konfiguriert ist, dass er als das Leistungsumwandlungsergebnis der Stromumwandlungsvorrichtung verwendet wird.

8. Verfahren zur Steuerung einer Energieumwandlungsvorrichtung, angewandt auf die Energieumwandlungsvorrichtung nach einem der Ansprüche 1 bis 7, umfassend:

wobei die Steuereinheit jeweils mit jeder der Leistungsumwandlungseinheiten (1,..., N) verbunden ist und Eingeben der entsprechenden Steuersignale in die jeweiligen Leistungsumwandlungseinheiten; und
die entsprechenden Steuersignale jeweils den Leistungsumwandlungseinheiten zugeführt werden und ermöglichen, dass die Ausgangsspannungen der Leistungsumwandlungseinheiten den gleichen Spannungswert haben; und der Ausgang der mindestens einen der Leistungsumwandlungseinheiten als das Leistungsumwandlungsergebnis der Stromumwandlungsvorrichtung verwendet wird;
**dadurch gekennzeichnet**
die Steuereinheit erzeugt das Steuersignal, das jeder der Leistungsumwandlungseinheiten entspricht, entsprechend dem Stromwert der Induktoreinheit, dem Spannungswert der Stromversorgungseinheit und dem Ausgangsspannungswert jeder der Leistungsumwandlungseinheiten, und gibt das Steuersignal an die entsprechende Leistungsumwandlungseinheit.

9. Verfahren zur Steuerung einer Stromumwandlungsvorrichtung nach Anspruch 8, wobei die Steuereinheit entsprechend dem Stromwert der Induktoreinheit, dem Spannungswert der Stromversorgungseinheit und dem Spannungswert jeder der Leistungsumwandlungseinheiten (1,..., N) das jeder der Leistungsumwandlungseinheiten entsprechende Steuersignal erzeugt:

Erfassung des Stromwerts der Induktionseinheit, des Spannungswerts der Stromversorgungseinheit und des Spannungswerts jeder der Leistungsumwandlungseinheiten in der voreingestellten Periode;
Erzeugen des gleichmäßigen Tastverhältnisses entsprechend dem erfassten Stromwert der Induktoreinheit, dem Spannungswert der Stromversorgungseinheit und dem Ausgangsspannungswert jeder der Leistungsumwandlungseinheiten (1,..., N);
und
Durchführung einer Phasenverschiebungsverarbeitung entsprechend dem gleichmäßigen Tastverhältnis, um das Steuersignal zu erzeugen, das jeder der Leistungsumwandlungseinheiten (1,..., N) entspricht.

**Revendications**

1. Appareil de conversion de puissance, comprenant un groupe d'unités de conversion de puissance et une unité de commande,
dans lequel

le groupe d'unités de conversion de puissance comprend au moins deux unités de conversion de puissance (1,..., N) qui sont

connectées en série, le groupe d'unités de conversion de puissance est connecté en série à une unité d'inductance et à une unité d'alimentation, et une sortie d'au moins une des unités de conversion de puissance est configurée pour être utilisée comme résultat de conversion de puissance de l'appareil de conversion de puissance;

l'unité de commande est connectée à chacune des unités de conversion de puissance et est configurée pour envoyer des signaux de commande correspondants aux unités de conversion de puissance, respectivement, les signaux de commande étant configurés pour permettre aux tensions de sortie des unités de conversion de puissance d'avoir la même valeur de tension;

**caractérisé en ce que**

l'unité de contrôle est également connectée à l'unité d'inductance, à l'unité d'alimentation et à une extrémité de sortie de tension de chacune des unités de conversion de puissance, et l'unité de contrôle est configurée pour générer, en fonction d'une valeur de courant de l'unité d'inductance, d'une valeur de tension de l'unité d'alimentation et d'une valeur de tension de sortie de chacune des unités de conversion de puissance, un signal de contrôle correspondant à chacune des unités de conversion de puissance.

**2.** Appareil de conversion de puissance de la revendication 1, dans lequel l'unité de commande comprend: une sous-unité d'échantillonnage, une sous-unité d'égalisation de la tension et une sous-unité de génération de signaux; dans lequel

la sous-unité d'échantillonnage est configurée pour acquérir la valeur du courant de l'inducteur, la valeur de la tension de l'unité d'alimentation et la valeur de la tension de sortie de chacune des unités de conversion de puissance dans une période prédéfinie;

la sous-unité d'égalisation de la tension est configurée pour générer un cycle de travail uniforme en fonction de la valeur du courant de l'unité d'induction, de la valeur de la tension de l'unité d'alimentation et de la valeur de la tension de sortie de chacune des unités de conversion de la puissance, qui sont acquises par la sous-unité d'échantillonnage; et

la sous-unité de génération de signaux est configurée pour effectuer un traitement de déphasage en fonction du rapport cyclique uniforme généré par la sous-unité d'égalisation de la tension afin de générer le signal de commande correspondant à chacune des unités de conversion de puissance.

**3.** Appareil de conversion de puissance de la revendication 2, dans lequel l'unité de commande comprend en outre: une sous-unité de conversion analogique-numérique, connectée entre la sous-unité d'échantillonnage et la sous-unité d'égalisation de tension et configurée pour convertir la valeur du courant de l'inducteur, la valeur de la tension de l'unité d'alimentation et la valeur de la tension de sortie de chacune des unités de conversion de puissance, acquises par la sous-unité d'échantillonnage, en signaux numériques respectifs et émettre les signaux numériques vers la sous-unité d'égalisation de tension; et la sous-unité d'égalisation de tension est configurée pour générer le cycle de service uniforme en fonction des signaux numériques accessibles à partir de la sous-unité de conversion analogique-numérique.

**4.** Appareil de conversion de puissance de la revendication 2, dans lequel chacune des unités de conversion de puissance comprend: une sous-unité de bras haute fréquence et une sous-unité de bras basse fréquence qui sont connectées en parallèle; la sous-unité de bras haute fréquence comprend une paire de bras haute fréquence connectés en série, et la sous-unité de bras basse fréquence comprend une paire de bras basse fréquence connectés en série; et le signal de commande correspondant à chacune des unités de conversion de puissance comprend: une paire de signaux de modulation de largeur d'impulsion à haute fréquence (PWMN1, PWMN2) connectés respectivement à la paire de bras à haute fréquence, et une paire de signaux de modulation de largeur d'impulsion à basse fréquence (PWMNH, PWMNL) connectés respectivement à la paire de bras à basse fréquence.

**5.** Appareil de conversion de puissance de la revendication 4, dans lequel la paire de bras haute fréquence dans chacune des au moins deux unités de conversion de puissance comprend un bras supérieur haute fréquence et un bras inférieur haute fréquence, la paire de bras basse fréquence dans chacune des au moins deux unités de conversion de puissance comprend un bras supérieur basse fréquence et un bras inférieur basse fréquence, chaque bras de la paire de bras haute fréquence et de la paire de bras haute fréquence comprend un transistor métal-oxyde-semiconducteur, MOS, (V1, V2, V3, V4), un condensateur (C1, C2, C3, C4) et une diode de roue libre (D1, D2, D3, D4),

dans lequel une grille du transistor MOS (V1, V2, V3, V4) de chaque bras dans la paire de bras haute fréquence et dans la paire de bras basse fréquence est connectée à un signal de modulation de largeur d'impulsion correspondant à chaque bras, la diode de roue libre (D1, D2, D3, D4) est une diode de corps intégrée dans le transistor MOS (V1, V2, V3, V4) et est connectée entre le drain et la source du transistor MOS (V1, V2, V3, V4), et le condensateur (C1, C2, C3, C4) est connecté en parallèle avec la diode de roue libre (D1, D2, D3, D4); la paire de signaux de modulation de largeur d'impulsion à haute fréquence sont des signaux complémentaires; et la paire de signaux de modulation de largeur d'impulsion à basse fréquence sont des signaux complémentaires; dans lequel, dans une tête des unités de conversion de puissance connectées en série, un drain du transistor MOS (V1, V2, V3, V4) de chaque bras supérieur haute fréquence et bras supérieur basse fréquence est connecté à une électrode positive de l'unité d'alimentation; dans une unité de conversion de puissance autre que celle de tête, un drain du transistor MOS (V1, V2, V3, V4) du bras supérieur haute fréquence et du bras supérieur basse fréquence est connecté à une source du transistor MOS (V1, V2, V3, V4) de chacun des bras inférieurs haute fréquence et des bras inférieurs basse fréquence dans une unité de conversion de puissance précédente de l'unité de conversion de puissance; et dans chacune des unités de conversion de puissance, un drain du transistor MOS (V1, V2, V3, V4) de chacun des bras inférieurs à haute fréquence et des bras inférieurs à basse fréquence est connecté à une source d'un bras supérieur à haute fréquence et d'un bras supérieur à basse fréquence respectifs; et

dans lequel, dans chacune des unités de conversion de puissance, une source du transistor MOS (V1, V2, V3, V4) de chacun des bras supérieurs à haute fréquence et des bras supérieurs à basse fréquence est connectée à un drain d'un bras inférieur à haute fréquence et d'un bras inférieur à basse fréquence respectifs; dans une queue des unités de conversion de puissance connectées en série, une source du transistor MOS (V1, V2, V3, V4) de chacun des bras inférieurs à haute fréquence et des bras inférieurs à basse fréquence est connectée à une électrode négative de l'unité d'alimentation en puissance; et dans une unité de conversion de puissance autre que la dernière des unités de conversion de puissance, une source du transistor MOS (V1, V2, V3, V4) de chacun des bras inférieurs à haute fréquence et des bras inférieurs à basse fréquence est connectée à un drain du transistor MOS (V1, V2, V3, V4) d'un bras supérieur à haute fréquence et d'un bras supérieur à basse fréquence respectifs dans une unité de conversion de puissance suivante de l'unité de conversion de puissance.

6. Appareil de conversion de puissance de la revendication 5, dans lequel

plusieurs paires de signaux de modulation de largeur d'impulsion à haute fréquence (PWMN1, PWMN2) correspondant respectivement aux deux unités de conversion de puissance au moins ont un même rapport cyclique et des phases décalées de $2\pi/N$;
plusieurs paires de signaux de modulation de largeur d'impulsion à basse fréquence (PWMNH, PWMNL) correspondant respectivement à la
au moins deux unités de conversion de puissance ont le même cycle de travail et la même phase;
la paire de signaux de modulation de largeur d'impulsion à basse fréquence (PWMNH, PWMNL) de chacune des unités de conversion de puissance (1,..., N) a la même fréquence; et
N est un nombre d'unités de conversion de puissance dans le groupe d'unités de conversion de puissance.

7. Appareil de conversion de puissance de l'une des revendications 1 à 6, comprenant en outre: des unités de condensateur correspondant respectivement aux unités de conversion de puissance, et des unités de conversion de tension correspondant respectivement aux unités de conversion de puissance; l'extrémité de sortie de tension de chacune des unités de conversion de puissance est connectée en parallèle à une unité de condensateur respective, et l'unité de condensateur respective est connectée en parallèle à une entrée d'une unité de conversion de tension respective, l'extrémité de sortie de tension de chacune des unités de conversion de puissance est connectée à une entrée de l'unité de conversion de tension respective, et une sortie de l'unité de conversion de tension respective est configurée pour être utilisée en tant que résultat de conversion de puissance de l'appareil de conversion de puissance.

8. Procédé de commande d'un appareil de conversion de puissance, appliqué à l'appareil de conversion de puissance de l'une quelconque des revendications 1 à 7, comprenant:

l'unité de contrôle est respectivement connectée à chacune des unités de conversion de puissance (1,..., N) et l'entrée des signaux de commande correspondants dans les unités de conversion de puissance respectivement; et
les signaux de commande correspondants sont accessibles aux unités de conversion de puissance respectivement, et permettent aux tensions de sortie des unités de conversion de puissance d'avoir la même valeur de tension; et la sortie d'au moins une des unités de conversion de puissance est utilisée comme résultat de conversion de puissance de l'appareil de conversion de puissance;

**caractérisé en ce que**

l'unité de commande génère le signal de commande correspondant à chacune des unités de conversion de puissance en fonction de la valeur du courant de l'unité d'induction, de la valeur de la tension de l'unité d'alimentation et de la valeur de la tension de sortie de chacune des unités de conversion de puissance, et transmet le signal de commande à l'unité de conversion de puissance correspondante.

9. Procédé de commande d'un appareil de conversion de puissance selon la revendication 8, dans lequel l'unité de commande génère, en fonction de la valeur du courant de l'unité d'induction, de la valeur de la tension de l'unité d'alimentation et de la valeur de la tension de chacune des unités de conversion de puissance (1,..., N), le signal de commande correspondant à chacune des unités de conversion de puissance, qui comprend:

acquérir la valeur du courant de l'inducteur, la valeur de la tension de l'unité d'alimentation et la valeur de la tension de chacune des unités de conversion de puissance dans la période prédéfinie;
générer le rapport cyclique uniforme en fonction de la valeur de courant acquise de l'inducteur, de la valeur de tension de l'unité d'alimentation et de la valeur de tension de sortie de chacune des unités de conversion de puissance (1,..., N); et
effectuer un traitement de déphasage en fonction du rapport cyclique uniforme pour générer le signal de commande correspondant à chacune des unités de conversion de puissance (1,..., N).

**FIG. 1**

Power conversion unit group

Inductor unit

Power conversion unit 1

Power conversion unit 2

... ...

Power conversion unit N

Output

Power supply unit

Sampling subunit

Analog-to-digital conversion subunit

Control signal

Control unit

Voltage equalizing subunit

Signal generating subunit

**FIG. 2**

**FIG. 3**

**FIG. 4**

FIG. 5

**FIG. 6**

FIG. 7

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016261205 A1, KOLAR JOHANN [CN]
- WO 2016206269 A1, ZTE CORP [CN])
- EP 3316469 A1, ZTE CORP [CN]

**Non-patent literature cited in the description**

- **KASPER MATTHIAS et al.** Hyper-efficient (98%) and super-compact (3.3kW/dm3) isolated AC/DC telecom power supply module based on multicell converter approach. IEEE, 14 September 2014, 150-157